# EUROPEAN PATENT SPECIFICATION

(11) **EP 2 417 080 B1**
(45) Date of publication and mention of the grant of the patent: **21.02.2018**
(21) Application number: 10762571.7
(22) Date of filing: 12.04.2010
(51) Int. Cl.: C04B 35/01, C04B 35/64, C04B 35/468, C01B 13/36, C01G 23/00

(54) **HYDROTHERMAL PROCESSING IN THE WET-CHEMICAL PREPARATION OF MIXED METAL OXIDE CERAMIC POWDERS**
HYDROTHERMISCHE VERARBEITUNG BEI DER NASSEN CHEMISCHEN ZUBEREITUNG VON MISCHMETALLOXID-KERAMIK-PULVERN
TRAITEMENT HYDROTHERMIQUE DANS LA PRÉPARATION CHIMIQUE PAR VOIE HUMIDE DE POUDRES DE CÉRAMIQUE À OXYDE DE MÉTAL MIXTE

(30) Priority: 10.04.2009 US 168518 P
(43) Date of publication of application: 15.02.2012
(73) Proprietor: Eestor, Inc., Cedar Park, Texas 78613 (US)
(72) Inventor: WEIR, Richard Dean, Cedar Park Texas 78613 (US); NELSON, Carl Walter, Austin Texas 78731 (US)
(74) Representative: HGF Limited
(86) International application number: PCT/US2010/030756
(87) International publication number: WO 2010/118423

(56) References cited:
- WO-A1-2007/015622
- JP-A- 61 103 533
- KR-A- 19990 082 496
- KR-B1- 100 773 895
- US-A- 5 453 262
- US-A1- 2007 280 877
- US-B1- 6 171 571

## Description

### FIELD OF THE DISCLOSURE

This disclosure, in general, relates to the hydrothermal processing in wet-chemical preparation of mixed metal oxide ceramics, particularly, ceramic particulate. In particular, this disclosure relates to a method of forming at least partially crystalline ceramic powders.

### BACKGROUND

Ceramic powders are used in the fabrication of numerous different types of devices including specialized mechanical components, coating for mechanical components, semiconductor devices, superconducting devices, device packaging, passive electronic components such as capacitors, and more sophisticated energy storage devices. Numerous different techniques exist for the synthesis and fabrication of ceramic powders including solid phase synthesis such as solid-solid diffusion, liquid phase synthesis such as precipitation and co-precipitation, and synthesis using gas phase reactants. Moreover, a host of related fabrication techniques can also be used including: spray drying, spray roasting, metal organic decomposition, freeze drying, sol-gel synthesis, melt solidification, and the like.

Conventional methods for preparing ceramic powders entail mechanical mixing of dry powders of water-insoluble carbonates, oxides, and sometimes silicates, where each constituent of the ceramic composition is carefully selected individually. For example, if the ceramic composition has nine constituents in solid solution, then correspondingly nine starting powders are selected in accordance with the amount of each required for the end product compound. The starting powders are very likely to have different median particle sizes and different particle size distributions. In an attempt to comminute the mixture of powders to a smaller, more uniform particle size and size distribution for each component, the powder mixture is placed in a ball mill and milled for several hours. The milling process generates wear debris from the ball mill itself and, the debris becomes incorporated in the powder mixture. Because of the often wide disparity in particle size among the various commercially available starting powders (and even significant variation in particle size of the same powder from lot to lot), an optimum result from ball milling rarely occurs, and a contamination-free product is not obtained.

Examples of known processes for preparing ceramic powders are disclosed in: U.S. Patent No. 5,453,262; U.S. Patent Publication No. 2007/280877; and International Patent Publication WO 2007/015622.

Moreover, additional processing steps are still required. Solid-solid diffusion at high temperature (but below the temperature at which rapid sintering starts) of the ball-milled powder mixture forms a single powder. The finer each powder in the mixture is, the higher the particle surface-to-volume ratio is for each, providing a greater surface area per unit weight of each powder for solid-solid diffusion to occur. Typically, longer times spent at high temperature (e.g., the calcining temperature) produce a more satisfactory end product. Homogeneity is improved by repeating several times the ball-milling and calcining steps in succession, each requiring several hours. Of course, such processing increases the amount of ball-milling wear debris added to the powder, thereby increasing the amount of contamination in the end ceramic product. In addition, higher the degrees of homogeneity lead to higher costs and longer processing times.

Accordingly, it is desirable to have improved wet-chemical processing techniques to prepare ceramic powders, in particular at least partially crystalline ceramic powders, for use in the fabrication of various different devices and materials.

### BRIEF DESCRIPTION OF THE DRAWINGS

The present disclosure may be better understood, and its numerous features and advantages made apparent to those skilled in the art by referencing the accompanying drawings.
FIG. 1 includes a flow diagram of an exemplary method for wet-chemical processing of mixed metal oxide ceramic powders.
FIG. 2 includes an illustration of an exemplary hydrothermal treatment system.
FIG. 3 and FIG. 4 include illustrations of exemplary particle size distributions, after hydrothermal processing and after calcining, respectively.
FIG. 5 includes an illustration of an exemplary x-ray diffraction of an exemplary particulate.
FIG. 6 includes an SEM image of an exemplary particulate.

The use of the same reference symbols in different drawings indicates similar or identical items.

### DESCRIPTION OF THE PREFERRED EMBODIMENT(S)

In one aspect, the present invention provides a method of forming at least partially crystalline ceramic powder, the method comprising:
providing mixed metal oxide particles in an aqueous suspension in a hydrothermal treatment vessel;
heating the aqueous suspension at a temperature of at least 150°C at a treatment pressure of at least 1.38 MPa; and
adding an aqueous solution having a temperature of not greater than 100°C to the hydrothermal treatment vessel to control pH during hydrothermal treatment while heating and while releasing steam from the hydrothermal treatment vessel.

Suitably, mixed metal oxide ceramic particulate, such as composition-modified barium titanate, are prepared by precipitating primary particles from chelated precursors, hydrothermally treating the precipitated primary particles, and separating the hydrothermally treated primary particles. The primary particles may optionally be washed and subjected to a heat treatment, such as a decomposition treatment or calcining treatment. In particular, the hydrothermal treatment may be performed at a temperature of at least 150°C and a pressure of at least 1.38MPa. In addition, the hydrothermal treatment may be performed in an open hydrothermal treatment system.

Suitably, the hydrothermal treatment system may include a pressure vessel, a heat source, and a cooling zone at the top of the vessel to condense and retain the moisture inside the vessel. In addition, the hydrothermal treatment system may include a compressed air inlet coupled to the pressure vessel or a fluid inlet coupled to the pressure vessel. Further, the hydrothermal treatment system may include a gas or steam outlet. Suitably, the hydrothermal treatment system is an open system, being characterized by input of water or air in conjunction with the release of air or steam during hydrothermal processing.

In a particular instance, the resulting particulate is a high-permittivity ceramic powder, such as a high-permittivity composition-modified barium titanate powder, that can be used to fabricate high-quality dielectric devices. In an example, the particulate may include a doped barium-calcium-zirconium-titanate of the composition (Ba_{1-α-ν}A_{µ}D_{ν}Ca_{α})[Ti_{1-x-δ-µ'-ν'}Mn_{δ}A'_{µ'}D'_{ν'}Zrₓ]_{z}O₃, where A = Ag or Zn, A' = Dy, Er, Ho, Y, Yb, or Ga; D = Nd, Pr, Sm, or Gd; D' = Nb or Mo, 0.10 ≤ x ≤ 0.25; 0 ≤ µ ≤ 0.01, 0 ≤ µ' ≤ 0.01, 0 ≤ ν ≤ 0.01, 0 ≤ ν' ≤ 0.01, 0 < δ ≤ 0.01, and 0.995 ≤ z ≤ 1.005, 0 ≤ α ≤ 0.005. Such barium-calcium-zirconium-titanate compounds have a perovskite structure of the general composition ABO₃, where the rare earth metal ions Nd, Pr, Sm, or Gd (having a large ion radius) may be arranged at A-sites, and the rare earth metal ions Dy, Er, Ho, Yb, the Group IIIB ion Y, or the Group IIIA ion Ga (having a small ion radius) may be arranged at B-sites. The perovskite material may include acceptor ions Ag, Zn, Dy, Er, Ho, Y, or Yb or donor ions Nb, Mo, Nd, Pr, Sm, or Gd at lattice sites having a different local symmetry. Donors and acceptors may form donor-acceptor complexes within the lattice structure of the barium-calcium-zirconium-titanate. In a particular instance, the ceramic powder includes a cubic perovskite composition-modified barium titanate that is paramagnetic in a temperature range, such as temperature range of - 40°C to 85°C or a temperature range of -25°C to 65°C. Suitably, the ceramic powder is free of or has low concentrations of strontium or iron ions. In another particular instance, the ceramic powder has a high-permittivity, such as a relative permittivity (K) of at least 15000, such as at least 18000.

In one instance, the ceramic particulate may be formed from precursor materials such as metal nitrates, a metal chelates, or any combination thereof. The metal nitrate or metal chelate may include a metal ion or oxometal ion including a metal or semi-metal of groups 1-14 of the periodic table, the lanthanoid series, or the actinoid series, based on the IUPAC convention. For example, the metal ions may be selected from the group including barium, calcium, titanium, zirconium, yttrium, manganese, neodymium, tin, zinc, vanadium, niobium, tantalum, molybdenum, tungsten, lanthanum, hafnium, chromium, or any combination thereof. Suitably, the metal ions include barium, titanium, and at least one of calcium, zirconium, yttrium, manganese, neodymium, tin, zinc, vanadium, niobium, tantalum, molybdenum, tungsten, lanthanum, hafnium, chromium, or any combination thereof. A suitable metal nitrate includes barium nitrate, calcium nitrate, or a combination thereof.

A suitable metal chelate includes a metal ion or oxometal ion and a chelating agent. Metal chelates are used as precursors to one or more of the constituent components of the ceramic powder. In general, chelation is the formation or presence of bonds (or other attractive interactions) between two or more separate binding sites within the same ligand and a single central atom. A molecular entity in which there is chelation (and the corresponding chemical species) is called a chelate. The terms bidentate (or didentate), tridentate, tetradentate, and multidentate are often used to indicate the number of potential binding sites of the ligand, at least two of which are used by the ligand in forming a chelate.

In one instance, the chelating agent includes a carboxylic acid that may be neutralized with a weak-base. Suitably, the chelating agent may include 2-hydroxypropanoic acid or an alpha-hydroxycarboxylic acid. A suitable alpha-hydroxycarboxylic acid includes 2-hydroxyethanoic acid (glycolic acid), 2-hydroxybutanedioic acid (malic acid), 2,3-dihydroxybutanedioic acid (tartaric acid), 2-hydroxy-1,2,3-propanetricarboxylic acid (citric acid), 2-hydroxybutanoic acid, 2-hydroxypentanoic acid, 2-hydroxyhexanoic acid, or any combination thereof. The chelating agent may be neutralized with a weak base, such as ammonium hydroxide (NH₄OH). Suitable chelates are disclosed in US Application No 11/497,744.

The chelated solution may also include a surfactant. A nonionic surfactant, such as polyoxyethylene(40) nonylphenyl ether, may used in aqueous solutions to suspend and disperse powder. The surfactant concentration in the reacted solution, such as the slurry including the precipitated particulate, is preferably 0.5 volume percent. Alternatively, the surfactant may be added through a separate solution or may be absent.

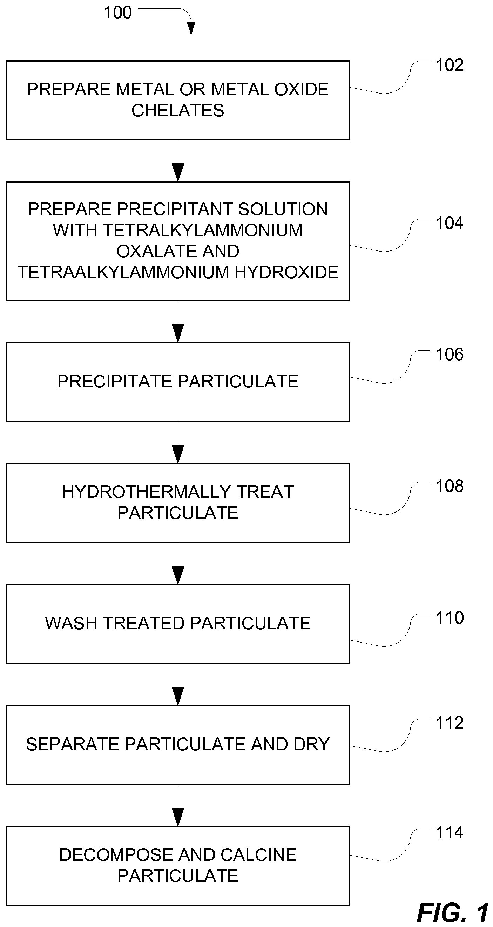

As illustrated in FIG. 1, the process for forming the ceramic particulate includes preparing metal chelates, as illustrated at 102. Suitably, a metal or oxometal salt and a chelating agent may be mixed resulting in the metal chelate. In one instance, the metal or oxometal salt is a nitrate salt of the metal or oxometal ion. The chelating agent may be 2-hydroxypropanoic acid or an alpha-hydroxycarboxylic acid. The resulting metal chelate may be neutralized with the addition of a weak base, such as ammonium hydroxide, or a strong base, such as tetraalkylammonium hydroxide, and remain in solution. Suitably, the metal chelate may be soluble in a solution having a pH in a range of 7 to 8.

In another instance, metal salts may be added to an aqueous solution including the metal chelates or may be added to an aqueous solution separate from the aqueous solution including the metal chelates. During precipitation, the metal salt solution may be added with the metal chelate solution as precursor materials to the mixed metal oxide ceramic powder. Suitably, the metal salts may include barium nitrate, calcium nitrate, or a combination thereof.

In a particular instance, the solution includes barium nitrate, a titanium chelate, and at least one other metal chelate. For example, the solutions may include barium nitrate, calcium nitrate, a titanium chelate, and one or more other metal chelates, such as at least 4 other metal chelates, or at least 6 other metal chelates.

In addition, a precipitant solution may be prepared, as illustrated at 104. For instance, the precipitant solution may be an aqueous solution including tetraalkylammonium hydroxide, tetraalkylammonium oxalate, or a combination thereof. The alkyl group of the tetraalkylammonium hydroxide or tetraalkylammonium oxalate may be a methyl, ethyl, or propyl group, or any combination thereof. Suitably, the tetraalkylammonium hydroxide includes tetramethylammonium hydroxide. Suitably, the tetraalkylammonium oxalate includes tetramethylammonium oxalate. In a particular instance, the precipitant solution includes both tetraalkylammonium hydroxide and tetraalkylammonium oxalate.

Water-soluble 2-hydroxycarboxylic acid (alpha-hydroxycarboxylic acid) chelates in general are hydrolytically stable over the pH range of 6 to 8. For the case of the oxotitanium(IV) and oxozirconium(IV) chelates, gelatinous amorphous hydrous hydroxides are formed above pH 8 and gelatinous amorphous hydrous oxides are formed below pH 6. When ammonium oxalate or tetramethylammonium oxalate is present in stoichiometric quantity with 2 to 5 percent excess, even with the addition of tetramethylammonium hydroxide to increase the pH sufficiently to result in a pH in the range of 8.0 to 12.0 at the time of reaction of the precursor and precipitant solutions, and at preferably 95°C to 99°C, partial-crystalline hydrated oxalate-hydroxides are formed instead of gelatinous hydrous hydroxides and/or oxides. Interestingly, the 2-hydroxycarboxylic acids and the oxalate anion are bidendate with two oxygen bonding sites within the ligand to the central metal or oxometal ion, and also are both five-sided rings. In particular, the solution is made sufficiently basic with the addition of tetramethylammonium hydroxide to result in a pH in the range of 8.0 to 12.0 of the mixed solutions, upon reaction with the neutral or near-neutral pH precursor solution. The average ratio of 25% tetramethylammonium hydroxide to 25% tetramethylammonium oxalate is respectively 148 grams for every 1000 grams.

As illustrated at 106, the chelate solution and precipitant solution are mixed to facilitate precipitation, resulting in a suspension including precipitated primary particles. For instance, the solutions may be mechanically mixed, ultrasonically mixed, or combined in a tubular reactor. In one instance the solutions are injected into a tubular reactor to provide both a desirable turbulence factor and other reaction conditions. Suitably, the turbulence factor is at least 1.5 x 10⁷ cm/s³. The pH of the reaction may be in a range of 8 to 12, such as a range of 10 to 12. The temperature of the reactor may be in a range of 75°C to 120°C, such as a range of 80°C to 110°C, a range of 90°C to 105°C, or even a range of 90°C to 100°C. The pressure of the streams can be in the range of 90 psi (0.62 MPa) to 120 psi (0.83 MPa) or higher depending on the application. The residence time within the reactor may be at least 50 milliseconds.

In a particular instance, the resulting primary particles have a particle size in a range of 5 microns to 15 microns, such as a range of 8 microns to 12 microns, or even a range of 9 microns to 11 microns.

Following the reaction in the reactor, the resulting suspension is hydrothermally treated, as illustrated at 108. For instance, the suspension may be hydrothermally treated in a pressure vessel. The temperature of the treatment is at least 150°C and the pressure is at least 1.38 MPa. Suitably, the temperature may be at least 180°C, such as at least 200°C, at least 215°C or even at least 220°C or higher. In a particular instance, the temperature may be as high as 300°C or higher. Suitably, the pressure may be at least 225 psi (1.55 MPa), such as at least 245 psi (1.69 MPa), at least 250 psi (1.72 MPa), or even at least 300 psi (2.07 MPa) or higher. The pressure may be as high as 1000 psi (6.89 MPa) or even as high as 1250 (8.62 MPa) psi or higher depending on the saturation pressure at the desired temperature. Suitably, the hydrothermal treatment is performed for a period of at least 4 hours, such as at least 5 hours, or even at least 6 hours. In one instance, the hydrothermal treatment is performed at a temperature in a range of 150°C to 220°C and a pressure in a range of 225 psi (1.55 MPa) to 300 psi (2.07 MPa) for a period in a range of 4 hours to 8 hours.

Suitably, the pH of the solution is greater than 8. For example, the pH of the solution may be at least 9, such as in a range of 10 to 13. In an example, a solution including tetraalkylammonium hydroxide is added to the hydrothermal treatment system, such as during the hydrothermal treatment, to maintain the pH.

In a particular instance, the hydrothermal treatment system is an open system. For example, the hydrothermal treatment vessel may be configured with ports to receive air or additional aqueous solutions and at least one port to release air and steam.

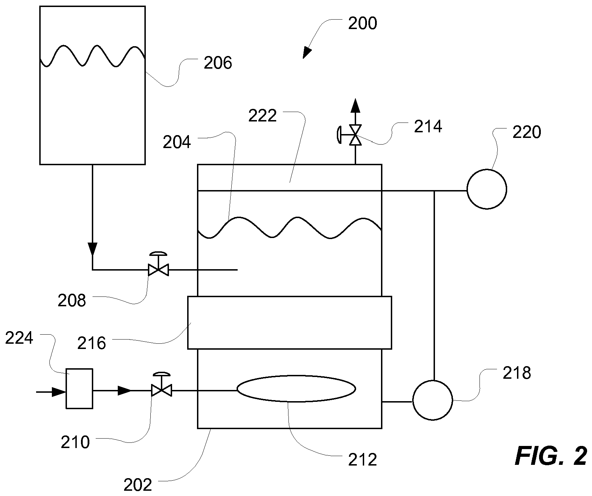

In a particular instance illustrated in FIG. 2, the hydrothermal treatment system 200 includes a pressure vessel 202. For example, the pressure vessel 202 may be configured for pressure of at least 250 psi (1.72 MPa), such as at least 350 psi (2.41 MPa), at least 400 psi (2.76 MPa), or even at least 500 psi (3.45 MPa) or higher. The pressure rating may be has high as 1500 psi (10.34 MPa) or higher. The hydrothermal treatment system 200 also includes a heat source 216. For instance, the heat source 216 may be heat tape wrapped around the outside of the pressure vessel 202. In another instance, the heat source 216 may be in contact with the bottom of the pressure vessel 202. Alternatively, the heat source 216 may be disposed on the bottom and side of the pressure vessel 202. In a further instance, the top of the pressure vessel 202 may be cooled to facilitate reflux. For example, the top of the pressure vessel 202 may include a water or air cooling system 222 or may be free of insulation, resulting in cooling near the top.

Suitably, the hydrothermal treatment system may include a source of cool water, such as a vessel 206, coupled via a fluid control system to the pressure vessel 202. For instance, the vessel 206 may include water or an aqueous solution including tetraalkylammonium hydroxide. The water or aqueous solution may be at a temperature not greater than 100°C, such as not greater than 50°C or even approximately room temperature (approximately 25°C). In one instance, the vessel 206 is pressurized to a pressure greater than the pressure of the pressure vessel 202 during hydrothermal treatment and the fluid control system may include a control valve 208. During hydrothermal treatment, the control valve 208 may release fluid from the vessel 206 into the pressure vessel at a location below the level of the fluid 204. Alternatively, the fluid control system may include a pump. The fluid may be provided to the system above the fluid surface 204 or alternatively, may be provided below the fluid surface 204. In a particular instance, the solution may provide a desirable pH and may be used to facilitate thermally-induced mixing and control pH during hydrothermal treatment.

Suitably, the hydrothermal treatment system 200 may include a source of compressed gas, such as compressed air. As illustrated in FIG. 2, the pressure vessel 202 includes a control valve 210 in communication with a source of compressed gas or high pressure clean dry air and a manifold 212 to distribute the compressed gas. For instance, the control valve 210 may introduce compressed air into the pressure vessel 202. The manifold 212 may distribute the air to facilitate mixing in the pressure vessel 202. In a particular instance, the compressed gas or air is provided below the fluid surface 204. The air may be heated or may be at room temperature (approximately 25°C). A pressure regulator 224 may control the inlet air pressure to tank 202 to ensure adequate air flow into vessel 202 for the application.

With the addition of heat, an aqueous solution, or compressed gas, pressure within the pressure vessel 202 may increase. Pressure may be measured using pressure gauge 220. In addition, the level of fluid within the pressure vessel 202 may be measured, for example, using a differential pressure gauge 218. Alternatively, fluid level may be measured using two separate pressure gauges. To assist the bubbling air mixing process, a control valve 214 coupled to the pressure vessel 202 may release gas, such as air, from the pressure vessel, maintaining a desired pressure and air flow within and from the pressure vessel 202. The continuous addition of compressed gas during the hydrothermal treatment provides an open system.

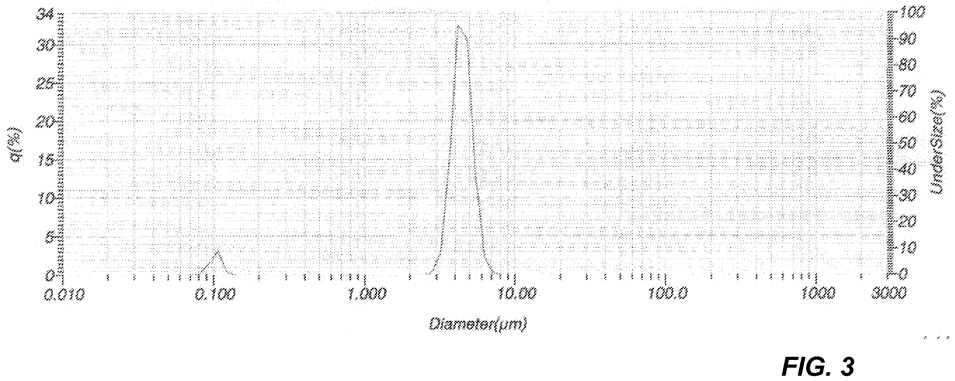

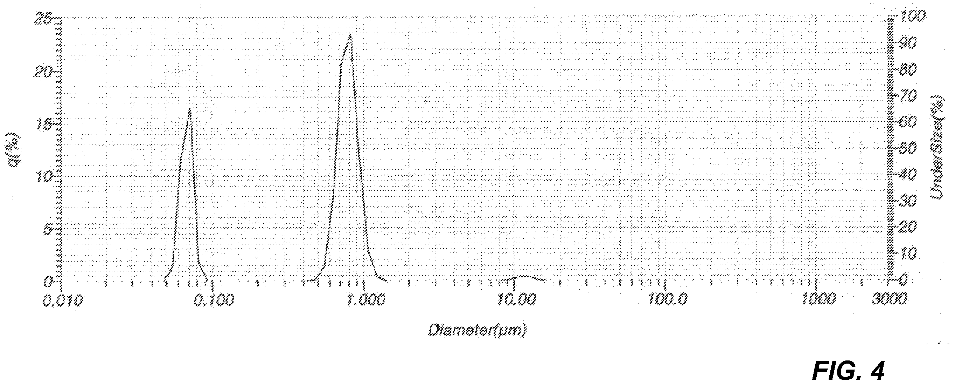

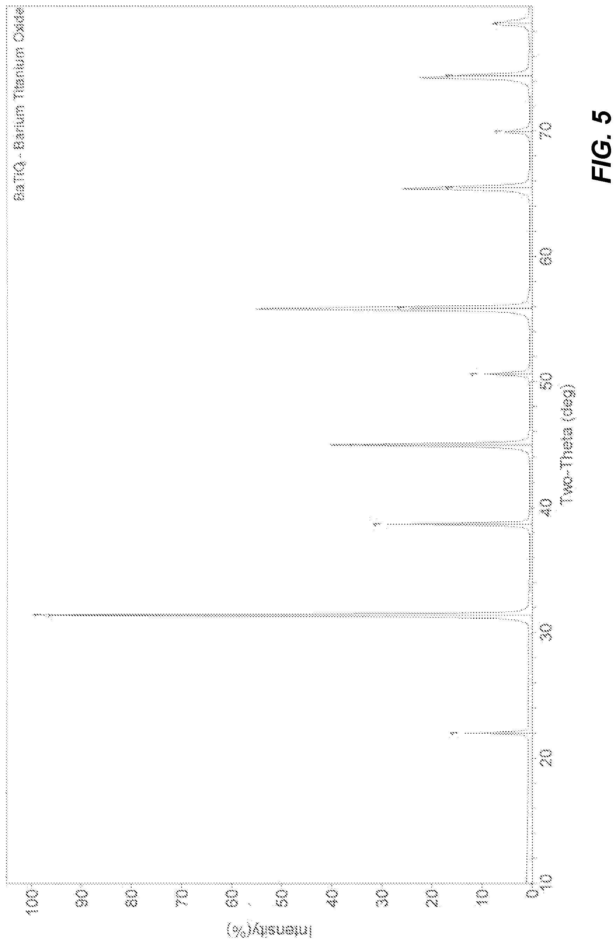

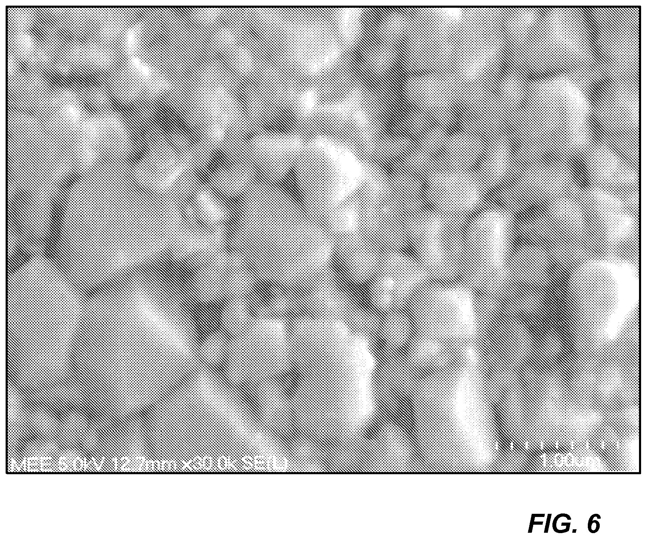

As a result of the hydrothermal treatment, the average particle size after hydrothermal treatment is in a range of 1 micron to 5 microns, such as a range of 2 microns to 5 microns, or even a range of 3.5 microns to 5 microns. For instance, a hydrothermal process that has a pressure of 250 psi (1.72 MPa) and a temperature in the range of 150°C to 205°C produces composition-modified barium titanate powder (CMBT) that has a particle mean size of 4.2594 µm (e.g., FIG. 3). After the CMBT powders have completed an acceptable decomposition and calcining process where the maximum temperature is in the range of 1050°C to 1150°C over an acceptable time period and in a flushing air environment, the particle mean size is reduced to 0.67074 µm (e.g., FIG. 4). As illustrated in the Examples, desirable homogeneity is achieved through the hydrothermal process. The reduction in particle size indicates the level of transformation of the particles amorphous phase to the crystalline phase during the calcining process. The Quantitative X-Ray Diffraction data illustrated, for example, in FIG. 5 reflects the desirable homogeneity and cubic perovskite crystalline structure also produced after the calcining process. An exemplary SEM picture of the calcined powders is illustrated in FIG. 6 where the near cubic or face centered structure is indicated. The achieved packaging density of these powders after hot pressing at a low temperature of 1100°C and a pressure of 2500 psi (17.24 MPa) is approximately 89%. Such a temperature and pressure is generally not sufficient to affect the particle size but only to compact and provide adhesion the powders.

Returning to FIG. 1, the resulting particulate may be optionally washed, separated from the suspension, and dried, as illustrated at 110 and 112. In one instance, the ceramic particulate may be washed using deionized water or an alcohol water mixture. In a further instance, the ceramic particulate may be dried, such as through spray drying, pan drying, flash drying or other drying procedures. Suitably, the particulate may be washed, concentrated, such as through centrifuging, and flash dried.

The dried particulate may be subjected to decomposition and calcining, for instance, in an oxygenated atmosphere, such as air, and may be subjected to particle agitation. During calcination in air of the product powder, half of the oxygen of the oxalate anion in its thermal decomposition becomes part of a mixed oxide compound and the other half with all the carbon is converted by oxidation to carbon dioxide gas. Solution residuals such as: ammonium oxalate [(NH₄)₂C₂O₄] (any excess amount) or tetramethylammonium oxalate {[(CH₃)₄N]₂C₂O₄} (any excess amount), tetramethylammonium hydroxide [(CH₃)₄NOH] (any excess amount), ammonium nitrate (NH₄NO₃), ammonium 2-hydroxypropanate [CH₃CH(OH)COONH₄)], and triammonium 2-hydroxy-1,2,3-propanetricarboxylate [(OH)C(COONH₄)(CH₂COONH₄)₂] also decompose. These residuals are thermally decomposed and oxidized and thereby completely converted to gaseous products such as H₂O, NH₃, CO, CO₂ N₂, N₂O, NO, and NO₂. The decomposition of these residuals occurs over specified temperature ranges, rates of temperature increase, with acceptable clean dry air flow to assist in sweeping the gaseous products away at an acceptable rate. The same decomposition generally applies to any 2-hydroxycarboxylic acid that may be selected as a chelating agent, as described below. In one instance, the powder is calcined under suitable conditions, e.g., at 1050°C in air in an appropriate silica glass (fused quartz) tray or tube. The maximum calcining temperature can be higher or lower depending on the application.

Suitably, the method exhibits desirable conversion of raw materials. In general, the metal ion components or reactants are expensive. The above method provides a desirably high percent conversion of the raw materials, particularly the metal ion components of reactants. For instance, the above methods may provide a percent yield of at least 98%, such as at least 99%, or even at least 99.5%. Such desirable conversion reduces waste and contamination of downstream processes.

As a result of the process, a desirable dielectric particulate is provided. Suitably, the dielectric particulate has a desirable particle size and particle size distribution. For instance, the average (mean) particle size is at least 0.6 µm, such as at least 0.7 µm Suitably, the average particle size is in a range of 0.6 to 2 µm, such as a range of 0.7 to 1.5 µm, a range of 0.9 to 1.5 µm, a range of 0.9 to 1.4 µm, or a range of 1.2 to 1.5 µm Alternatively, the average particle size may be in a range of 0.6 to 1 µm, such as 0.6 to 0.9 µm, or even a range of 0.7 to 0.9 µm In any case, the particle size distribution exhibits a half height ratio of not greater than 0.5. The half height ratio is defined as the ratio of the width of the particle size distribution at half of its maximum height and the average (mean) particle size for the distribution peak centered around the mean size. For instance, the half height ratio may be not greater than 0.45, such as not greater than 0.4, not greater than 0.3, or even not greater than 0.2. Further, the standard deviation may be not greater than 2.0, such as not greater than 1.5, not greater than 1.3, not greater than 1.2, or even not greater than 1.15.

Yet another feature of the processing is indicated in FIG. 5, which includes an illustration of x-ray diffraction of the CMBT powder formed by a method similar to that described in Example 1, where the data indicates substantially uniform cubic perovskite crystal structure. The high peaks, the narrowness of the peaks indicate a substantially uniform crystalline structure and the quantitative data indicates a substantial homogeneity of the powder. Examples of the above-described production processes result in CMBT powders having the substantially uniform crystalline structure, as the x-ray diffraction data of FIG. 5 indicates. Also, the CMBT powder is substantially free of BaCO₃, the barium carbonate data indicating the elimination of activating chemical from the powders during the decomposition and calcining process to at least the parts per trillion level or lower. Further, the above analysis indicates that the CMBT powders are paramagnetic in a desired temperature range and have a high relativity permittivity. CMBT powders with high relative permittivity are useful in forming high energy storage capacitors that can provide high energy storage units.

In one instance, the dielectric particulate exhibits a desirable relative permittivity, such as at least 15,000, at least 17,500, at least 18,000, or even at least 20,000. In another instance, the relative permittivity may be at least 30,000, such as at least 35,000 or even at least 50,000.

In a particular instance, the dielectric particulate is a composition-modified barium titanate powder. The barium is at least partially substituted with calcium, neodymium, lanthanum, or a combination thereof, and the titanium is at least partially substituted with at least one of zirconium, yttrium, manganese, neodymium, tin, zinc, vanadium, niobium, tantalum, molybdenum, tungsten, hafnium, chromium, or any combination thereof. The composition modified barium titanate powder has an average particular size in a range of 0.6 to 1.5 micrometers, and a half width ratio of not greater than 0.5.

### EXAMPLES

### Example 1

Two reactant streams are introduced into a tube reactor. The first stream includes barium nitrate, organic titanium chelate available under the Tradename Tyzor® from DuPont™, and trace amounts of other metal nitrates and metal or oxometal citrates, including metals selected from calcium, zirconium, yttrium, manganese, neodymium, tin, zinc, vanadium, niobium, tantalum, molybdenum, tungsten, lanthanum, hafnium, or chromium. The second stream includes a mixture of tetramethylammonium hydroxide and tetramethylammonium oxalate. The first stream has a flow rate about four times greater than the flow rate of the second stream. The tube reactor has a turbulence intensity of approximately 8.3x10¹⁰ cm/s³ and a Reynolds number of approximately 78,000. The pH of the solution is maintained between 10 and 12 and the temperature is approximately 95°C for both streams.

The particulate material formed in the reactor is hydrothermally treated using a pressure tank with a rating of 300 psi (2.07 MPa) at 150°C. The tank top is chilled to condense water vapor, thereby ensuring the solution volume remains constant for the duration of the treatment. When the liquid stream including the particulate is delivered to the tank, the process parameters are set at 250 psi (1.72 MPa) and 150°C for six-hours. Tetramethylammonium hydroxide is added to maintain the pH in a range of 10 to 12.

Following hydrothermal treatment, the particles are washed, concentrated in a centrifuge, flash dried, and subjected to decomposition and calcining at temperatures in a range of 25°C to 1050°C or higher. FIG. 3 illustrates the particle distribution following hydrothermal treatment. As illustrated, the mean particle size is approximately 4.24 µm and the standard deviation is approximately 1.16 µm. FIG. 4 illustrates the particle size distribution following decomposition and calcining. The mean particle size is 0.67 µm and the standard deviation is 1.14 µm. FIG. 5 illustrates the nature of the crystal, indicating that the crystal is homogenous cubic perovskite crystal and may have a high-permittivity.

### Example 2

For Example 2, streams 1 and 2 are the same as in Example 1. The two reactant streams are introduced into a tube reactor. The first stream includes barium nitrate, organic titanium chelate available under the tradename Tyzor® from DuPont™, and trace amounts of other metal nitrates and metal or oxometal citrates, including metals selected from calcium, zirconium, yttrium, manganese, neodymium, tin, zinc, vanadium, niobium, tantalum, molybdenum, tungsten, lanthanum, hafnium, or chromium. The second stream includes a mixture of tetramethylammonium hydroxide and tetramethylammonium oxalate. The first stream has a flow rate about four times greater than the flow rate of the second stream. The tube reactor has a turbulence intensity of approximately 1.9x10⁷ cm/s³ and a Reynolds number of approximately 27,000.

The particulate material formed in the reactor is hydrothermally treated using a pressure tank with a rating of 300 psi (2.07 MPa) at 150°C. The tank top is chilled to condense water vapor, thereby ensuring the solution volume remains constant for the duration of the treatment. When the liquid stream including the particulate is delivered to the tank, the process parameters are set at 250 psi (1.72 MPa) and 150°C for six-hours. The pH is maintained in a range of 10 to 12.

To determine percent yield, the composition of the aqueous starting precursors is verified. After the co-precipitation process is complete, the solid is removed and the remaining liquid is analyzed. The percentage of each constituent that has entered the composition modified barium titanate (CMBT) powder is determined. Analysis of the aqueous solutions is performed on a Perkin Elmer Optima 2100DV ICP-OES (induction-coupled-plasma optical-emission spectrograph). A calibration curve is generated for each analysis based on standards from High Purity Standards, Inc. At least eight standard solutions are used in calibration ranging from 0.0500 ppm to 10.0 ppm. The correlation coefficient of the calibration curves generated is greater than 0.999 for all constituents over the entire concentration range. Each calibration curve is manually inspected to insure there are no erroneous points influencing the linear correlation. The analysis and dilutions are performed in triplicate. Initial concentrations of the seven constituents are summarized in Table 1 and ranged from 30 to nearly 40,000 ppm. Analysis of the liquid after filtering out the CMBT powder shows constituent concentrations less than 10 ppm equating to nearly a 100% yield of each constituent in the CMBT powder.

**TABLE 1. Liquid Analysis for Powder Preparation**

| | Pre Process (ppm) | Pre Process (mg) | Post Process (ppm) | Post Process (mg) | Percent Yield (%) |
|---|---|---|---|---|---|
| Barium | 39133 | 290601 | 9.25 | 1690 | 99.42 |
| Tyzor® | 11100 | 82428 | 0.107 | 2.24 | 100.00 |
| COMP #1 | 4200 | 31189 | 0.090 | 1.88 | 99.99 |
| COMP #2 | 56.06 | 416.3 | 0.091 | 1.90 | 99.54 |
| COMP #3 | 88.00 | 653.5 | <0.050 | 0.00 | 100.00 |
| COMP #4 | 30.00 | 222.8 | <0.050 | 0.00 | 100.00 |
| COMP #5 | 456.0 | 3386 | 0.386 | 8.07 | 99.76 |

Following hydrothermal treatment, the particles are washed, concentrated in a centrifuge, flash dried, and subjected to decomposition and calcining at temperatures in a range of 25°C to 1050°C or higher. Following decomposition and calcining, the mean particle size is approximately 1.38 µm and the half width ratio is less than 0.44. The relative permittivity (K) is in the range of 18,500 to 50,000 over the temperature range of -20°C to 65°C or even a wider temperature range depending on the application.

### Example 3

A process similar to the process of Example 2 is performed using nine constituent metal ions. The nine constituents in the starting aqueous mixture range in concentration from 50 to several thousand ppm. After the powder production process is complete, the constituents range from undetectable concentrations to a maximum of 8.44 ppm. The percent each of the constituent crystallized in the composition-modified barium titanate powder range from 99.52% to 100% as summarized in Table 2.

**TABLE 2. Liquid Analysis for Powder Preparation**

| | Pre Process (ppm) | Pre Process (mg) | Post Process (ppm) | Post Process (mg) | Percent Yield (%) |
|---|---|---|---|---|---|
| Barium | 41500 | 307888 | 8.44 | 1488 | 99.52 |
| Tyzor® | 11780 | 87396 | 0.503 | 10.51 | 99.99 |
| COMP #1 | 4890 | 36278 | 0.604 | 12.62 | 99.97 |
| COMP #2 | 266.3 | 1976 | <0.050 | 0.00 | 100.00 |
| COMP #3 | 102.7 | 761.7 | <0.050 | 0.00 | 100.00 |
| COMP #4 | 589.3 | 4372 | <0.050 | 0.00 | 100.00 |
| COMP #5 | 77.60 | 575.7 | <0.050 | 0.00 | 100.00 |
| COMP #6 | 525.1 | 3895 | 0.388 | 8.11 | 99.79 |
| COMP #7 | 47.52 | 352.6 | <0.050 | 0.00 | 100.00 |

### Example 4

Table 3 illustrates the relationship of reaction tube inside diameter to stream velocity, turbulence intensity, and Reynolds number, and reaction tube length for a given total flow rate and residence time.

**TABLE 3. Flow Characteristics for Reaction Tubes**

| Reaction Tube Diameter | Liquid Flow Rate | Stream Velocity | Turbulence Intensity | Reynolds Number | Tube Length (80 ms residence time) |
|---|---|---|---|---|---|
| D | Q_{L} | V | Ti | Re | L |
| Cm | L/min | Cm/s | cm/s³ | | Cm |
| 0.3175 | 10.367 | 2182 | 1.031X1011 | 69,288 | 174.58 |
| 0.6350 | 10.367 | 545.6 | 4.02.7X108 | 34,644 | 43.65 |
| 1.270 | 10.367 | 136.4 | 1.573X106 | 17,322 | 10.91 |
| 2.540 | 10.367 | 34.10 | 6145 | 8661 | 2.728 |
| 5.080 | 10.367 | 8.525 | 24 | 4331 | 0.682 |
| 10.160 | 10.367 | 2.131 | 0.096 | 2165 | 0.170 |

Orifice diameter D: 0.125" (3.175 mm)
US gal/min flow coefficient CV: 0.300
ISO L/min flow coefficient KV: 4.325
Conversion factor: one KV = 14.4163 CV
Pressure drop ΔP across orifice: 100 psig (6.8948 barg)
Specific gravity SG relative to pure water at 4°C of one g/cm³: 1.20
Viscosity µ relative to pure water at 20°C of one mPa•s = one cp: 1.20

In a first aspect, a method of forming at least partially crystalline ceramic powder includes providing mixed metal oxide particles in an aqueous suspension in a hydrothermal treatment vessel, heating the aqueous suspension at a temperature of at least 150°C at a treatment pressure of at least 1.38 MPa, and adding an aqueous solution having a temperature of not greater than 100°C to the hydrothermal treatment vessel while heating and while releasing steam from the hydrothermal treatment vessel.

In an example of the first aspect, heating the aqueous suspension includes heating at a temperature of at least 200°C, such as at least 215°C. In another example, the aqueous solution has a temperature not greater than 50°C. In a further example of the first aspect, the aqueous solution comprises tetraalkylammonium hydroxide.

In another example of the first aspect, the method further includes adding air at a pressure at least the treatment pressure to the hydrothermal treatment vessel at a location below the surface of the aqueous suspension while releasing air from the hydrothermal treatment vessel at a location above the surface of the aqueous suspension.

In an additional example of the first aspect, the mixed metal oxide is co-precipitated and comprises barium and titanium.

In a second descriptiona method of forming at least partially crystalline ceramic powder includes providing mixed metal oxide particles in an aqueous suspension in a hydrothermal treatment vessel, heating the aqueous suspension to a temperature of at least 150°C at a treatment pressure of at least 200 psi (1.38 MPa), and adding air at a pressure at least the treatment pressure to the hydrothermal treatment vessel at a location below the surface of the aqueous suspension while releasing air from the hydrothermal treatment vessel at a location above the surface of the aqueous suspension is described. In an example of the second description, the temperature is at least 200°C, such as at least 215°C.

In another example of the second description, the mixed metal oxide is co-precipitated and comprises barium and titanium. In an additional example, the method further includes adding an aqueous solution to the hydrothermal treatment vessel. The aqueous solution has a temperature not greater than 100°C, such as not greater than 50°C. In a further example, the aqueous solution comprises tetraalkylammonium hydroxide.

In a third description, a hydrothermal treatment system includes a first pressure vessel comprising a port to receive an aqueous suspension comprising mixed metal oxide particles, a port to receive an aqueous solution, and a valve disposed above a surface line of the aqueous suspension to release gas. The hydrothermal treatment system further comprises a heat source connected to the first pressure vessel to heat fluid within the first pressure vessel and a second pressure vessel in fluid communication with the first pressure vessel via the port to receive the aqueous solution.

In an example of the third description, the hydrothermal treatment system further includes a gas manifold disposed proximal to the bottom of the first pressure vessel. The heat source can include heat tape. In another example, the heat source is a direct heat source disposed within the first pressure vessel.

In a further example of the third description, the valve disposed above surface line is connected to a pressure controller. In an additional example, the hydrothermal treatment system further includes a measurement device to determine fluid level.

Note that not all of the activities described above in the general description or the examples are required, that a portion of a specific activity may not be required, and that one or more further activities may be performed in addition to those described. Still further, the order in which activities are listed are not necessarily the order in which they are performed.

As used herein, the terms "comprises," "comprising," "includes," "including," "has," "having" or any other variation thereof, are intended to cover a non-exclusive inclusion. For example, a process, method, article, or apparatus that comprises a list of features is not necessarily limited only to those features but may include other features not expressly listed or inherent to such process, method, article, or apparatus. Further, unless expressly stated to the contrary, "or" refers to an inclusive-or and not to an exclusive-or. For example, a condition A or B is satisfied by any one of the following: A is true (or present) and B is false (or not present), A is false (or not present) and B is true (or present), and both A and B are true (or present).

Also, the use of "a" or "an" are employed to describe elements and components described herein. This is done merely for convenience and to give a general sense of the scope of the invention. This description should be read to include one or at least one and the singular also includes the plural unless it is obvious that it is meant otherwise.

Benefits, other advantages, and solutions to problems have been described above with regard to specific embodiments. However, the benefits, advantages, solutions to problems, and any feature(s) that may cause any benefit, advantage, or solution to occur or become more pronounced are not to be construed as a critical, required, or essential feature of any or all the claims.

After reading the specification, skilled artisans will appreciate that certain features are, for clarity, described herein in the context of separate embodiments, may also be provided in combination in a single embodiment. Conversely, various features that are, for brevity, described in the context of a single embodiment, may also be provided separately or in any subcombination. Further, references to values stated in ranges include each and every value within that range.

## Claims

1. A method of forming at least partially crystalline ceramic powder, the method comprising:
providing mixed metal oxide particles in an aqueous suspension in a hydrothermal treatment vessel;
heating the aqueous suspension at a temperature of at least 150°C at a treatment pressure of at least 1.38 MPa; and
adding an aqueous solution having a temperature of not greater than 100°C to the hydrothermal treatment vessel to control pH during hydrothermal treatment while heating and while releasing steam from the hydrothermal treatment vessel.

2. The method of claim 1, wherein heating the aqueous suspension include heating at a temperature of at least 200°C, in particular heating at a temperature of at least 215°C.

3. The method of claim 1 or 2, further comprising adding air at a pressure at least the treatment pressure to the hydrothermal treatment vessel at a location below the surface of the aqueous suspension while releasing air from the hydrothermal treatment vessel at a location above the surface of the aqueous suspension.

4. The method of claim 3, wherein the temperature is at least 200°C, in particular at least 215°C.

5. The method of any one of claims 1, 2, 3 or 4, wherein the mixed metal oxide is co-precipitated and comprises barium and titanium.

6. The method of claim 3 or 4, further comprising adding an aqueous solution to the hydrothermal treatment vessel, the aqueous solution having a temperature not greater than 100°C.

7. The method of claim 1 or 6, wherein the aqueous solution has a temperature not greater than 50°C.

8. The method of any of claim 1, 2 or 6, wherein the aqueous solution comprises tetraalkylammonium hydroxide.

9. The method of claim 1, wherein the hydrothermal treatment system comprises:
a first pressure vessel comprising a port to receive an aqueous suspension comprising mixed metal oxide particles, a port to receive an aqueous solution, and a valve disposed above a surface line of the aqueous suspension to release gas;
a heat source connected to the first pressure vessel to heat fluid within the first pressure vessel; and
a second pressure vessel in fluid communication with the first pressure vessel via the port to receive the aqueous solution.

10. The method of claim 9, further comprising a gas manifold disposed proximal to the bottom of the first pressure vessel.

11. The method of claim 9, wherein the heat source comprises heat tape.

12. The method of claim 9, wherein the heat source is a direct heat source disposed within the first pressure vessel.

13. The method of any one of claims 9-12, wherein the valve disposed above surface line is connected to a pressure controller.

14. The method of any one of claims 9-12, further comprising a measurement device to determine fluid level.

15. The method of claim 1, wherein the crystalline ceramic powder comprises (Ba_{1-α-µ ν}A_{µ}D_{ν}Ca_{α})[Ti_{1-x-δ-µ'-ν'}Mn_{δ}A'_{µ'}D'_{ν'}Zrₓ]_{z}O₃, where A = Ag or Zn, A' = Dy, Er, Ho, Y, Yb, or Ga; D = Nd, Pr, Sm, or Gd; D' = Nb or Mo, 0.10 ≤ x ≤ 0.25; 0 ≤ µ ≤ 0.01, 0 ≤ µ' ≤ 0.01, 0 ≤ ν ≤ 0.01, 0 ≤ v' ≤ 0.01, 0 ≤ δ ≤ 0.01, and 0.995 ≤ z ≤ 1.005, 0 ≤ α ≤ 0.005.

## Patentansprüche

1. Verfahren zum Bilden von mindestens teilweise kristallinem Keramikpulver, das Verfahren umfassend:
Bereitstellen von gemischten Metalloxidpartikeln in einer wässrigen Suspension in einem hydrothermalen Behandlungsgefäß;
Erhitzen der wässrigen Suspension mit einer Temperatur von mindestens 150 °C mit einem Behandlungsdruck von mindestens 1,38 MPa; und
Hinzufügen einer wässrigen Lösung mit einer Temperatur von nicht höher als 100 °C zu dem hydrothermalen Behandlungsgefäß, um den pH während einer hydrothermalen Behandlung beim Erhitzen und beim Freisetzen von Dampf aus dem hydrothermalen Behandlungsgefäß zu regeln.

2. Verfahren nach Anspruch 1, wobei ein Erhitzen der wässrigen Suspension ein Erhitzen mit einer Temperatur von mindestens 200 °C enthält, besonders Erhitzen mit einer Temperatur von mindestens 215 °C.

3. Verfahren nach Anspruch 1 oder 2, ferner umfassend ein Hinzufügen von Luft mit einem Druck von mindestens dem Behandlungsdruck zu dem hydrothermalen Behandlungsgefäß an einer Stelle unterhalb der Oberfläche der wässrigen Suspension, während Luft aus dem hydrothermalen Behandlungsgefäß an einer Stelle über der Oberfläche der wässrigen Suspension freigesetzt wird.

4. Verfahren nach Anspruch 3, wobei die Temperatur mindestens 200 °C ist, besonders mindestens 215 °C.

5. Verfahren nach einem der Ansprüche 1, 2, 3 oder 4, wobei das gemischte Metalloxid mitgefällt wird und Barium und Titan umfasst.

6. Verfahren nach Anspruch 3 oder 4, ferner umfassend ein Hinzufügen einer wässrigen Lösung zu dem hydrothermalen Behandlungsgefäß, wobei die wässrige Lösung eine Temperatur von nicht höher als 100 °C hat.

7. Verfahren nach Anspruch 1 oder 6, wobei die wässrige Lösung einer Temperatur von nicht höher als 50 °C hat.

8. Verfahren nach einem der Ansprüche 1, 2 oder 6, wobei die wässrige Lösung Tetraalkylammoniumhydroxid umfasst.

9. Verfahren nach Anspruch 1, wobei das hydrothermale Behandlungssystem umfasst:
ein erstes Druckgefäß, umfassend einen Anschluss zum Erhalten einer wässrigen Suspension umfassend gemischte Metalloxidpartikel, einen Anschluss zum Erhalten einer wässrigen Lösung und ein Ventil, das oberhalb einer Oberflächenlinie der wässrigen Suspension angeordnet ist, um Gas freizusetzen;
eine Wärmequelle, die mit dem ersten Druckgefäß verbunden ist, um Fluid in dem ersten Druckgefäß zu erhitzen; und
ein zweites Druckgefäß in Fluidverbindung mit dem ersten Druckgefäß über den Anschluss, um die wässrige Lösung zu erhalten.

10. Verfahren nach Anspruch 9, ferner umfassend einen Gasverteiler, der proximal zum Boden des ersten Druckgefäßes angeordnet ist.

11. Verfahren nach Anspruch 9, wobei die Wärmequelle eine Begleitheizung umfasst.

12. Verfahren nach Anspruch 9, wobei die Wärmequelle eine direkte Wärmequelle ist, die in dem ersten Druckgefäß angeordnet ist.

13. Verfahren nach einem der Ansprüche 9-12, wobei das Ventil, das oberhalb der Oberflächenlinie angeordnet ist, mit einem Druckregler verbunden ist.

14. Verfahren nach einem der Ansprüche 9-12, ferner umfassend eine Messvorrichtung zum Bestimmen eines Fluidstands.

15. Verfahren nach Anspruch 1, wobei das kristalline Keramikpulver (Ba_{1-α-µ-ν}A_{µ}D_{ν}Ca_{α})[Ti_{1-x-δ-µ'-ν'}Mn_{δ}A'_{µ'}D'_{ν'}Zrx]_{z}O₃ umfasst, wobei A = Ag oder Zn, A' = Dy, Er, Ho, Y, Yb, oder Ga; D = Nd, Pr, Sm, oder Gd; D' =Nb oder Mo, 0,10 ≤ x ≤ 0,25; 0 ≤ µ ≤ 0,01, 0 ≤ µ' ≤ 0,01, 0 ≤ ν ≤ 0,01, 0 ≤ν' ≤ 0,01, 0 < δ ≤ 0,01, und 0,995 ≤ z ≤ 1,005, 0 ≤ α ≤ 0,005.

## Revendications

1. Procédé de formation d'une poudre céramique au moins partiellement cristalline, le procédé comprenant :
la production de particules d'oxyde de métal mixte dans une suspension aqueuse dans une cuve de traitement hydrothermique ;
le chauffage de la suspension aqueuse à une température supérieure ou égale à 150°C à une pression de traitement supérieure ou égale à 1,38 MPa ; et
l'ajout d'une solution aqueuse ayant une température inférieure ou égale à 100°C dans la cuve de traitement hydrothermique pour contrôler le pH pendant le traitement hydrothermique tout en chauffant et tout en libérant de la vapeur de la cuve de traitement hydrothermique.

2. Procédé selon la revendication 1, ledit chauffage de la suspension aqueuse comprenant le chauffage à une température supérieure ou égale à 200°C, en particulier le chauffage à une température supérieure ou égale à 215°C.

3. Procédé selon la revendication 1 ou 2, comprenant en outre l'ajout d'air à une pression supérieure ou égale à la pression de traitement dans la cuve de traitement hydrothermique en un emplacement situé en-dessous de la surface de la suspension aqueuse tout en libérant de l'air de la cuve de traitement hydrothermique en un emplacement situé au-dessus de la surface de la suspension aqueuse.

4. Procédé selon la revendication 3, ladite température étant supérieure ou égale à 200°C, en particulier supérieure ou égale à 215°C.

5. Procédé selon l'une quelconque des revendications 1, 2, 3 ou 4, ledit oxyde de métal mixte étant co-précipité et comprenant du baryum et du titane.

6. Procédé selon la revendication 3 ou 4, comprenant en outre l'ajout d'une solution aqueuse dans la cuve de traitement hydrothermique, la solution aqueuse ayant une température inférieure ou égale à 100°C.

7. Procédé selon la revendication 1 ou 6, ladite solution aqueuse ayant une température inférieure ou égale à 50°C.

8. Procédé selon l'une quelconque des revendications 1, 2 ou 6, ladite solution aqueuse comprenant un hydroxyde de tétraalkylammonium.

9. Procédé selon la revendication 1, le système de traitement hydrothermique comprenant :
une première cuve sous pression comprenant un orifice destiné à recevoir une suspension aqueuse comprenant des particules d'oxyde de métal mixte, un orifice destiné à recevoir une solution aqueuse, et une soupape disposée au-dessus de la ligne de surface de la suspension aqueuse pour libérer du gaz ;
une source de chaleur reliée à la première cuve sous pression pour chauffer un fluide au sein de la première cuve sous pression ; et
une seconde cuve sous pression en communication fluidique avec la première cuve sous pression par l'intermédiaire du port destiné à recevoir la solution aqueuse.

10. Procédé selon la revendication 9, comprenant en outre un collecteur de gaz disposé proximal par rapport au fond de la première cuve sous pression.

11. Procédé selon la revendication 9, ladite source de chaleur comprenant une bande chauffante.

12. Procédé selon la revendication 9, ladite source de chaleur étant une source de chaleur directe disposée au sein de la première cuve sous pression.

13. Procédé selon l'une quelconque des revendications 9 à 12, la soupape disposée au-dessus de la ligne de surface étant reliée à un régulateur de pression.

14. Procédé selon l'une quelconque des revendications 9 à 12, comprenant outre un dispositif de mesure pour déterminer le niveau de liquide.

15. Procédé selon la revendication 1, ladite poudre céramique cristalline comprenant (Ba_{1-α-µ-ν}A_{µ}D_{ν}Ca_{α})[Ti_{1-x-δ-µ'-ν'}Mn_{δ}A'_{µ'}D'_{ν'}Zrₓ]_{z}O₃, où A = Ag ou Zn ; A' = Dy, Er, Ho, Y, Yb ou Ga ; D = Nd, Pr, Sm ou Gd ; D'=Nb ou Mo, 0,10 ≤ x ≤ 0,25 ; 0 ≤ µ ≤ 0,01 ; 0 ≤ µ' ≤ 0,01, 0 ≤ ν ≤ 0,01 ; 0 ≤ ν' ≤ 0,01 ; 0 < δ ≤ 0,01 ; et 0,995 ≤ z ≤ 1,005 ; 0 ≤ α ≤ 0,005.
